# EUROPEAN PATENT SPECIFICATION

(11) **EP 3 369 548 B1**
(45) Date of publication and mention of the grant of the patent: **13.01.2021**
(21) Application number: 16859811.8
(22) Date of filing: 25.10.2016
(51) Int. Cl.: B29C 45/27, B29C 45/16, B29C 45/44

(54) **CASE AND METHOD FOR PRODUCING CASE**
GEHÄUSE UND VERFAHREN ZUR HERSTELLUNG EINES GEHÄUSES
BOÎTIER ET PROCÉDÉ DE PRODUCTION DE BOÎTIER

(30) Priority: 29.10.2015 JP 2015212921
(43) Date of publication of application: 05.09.2018
(73) Proprietor: Toppan Printing Co., Ltd., Tokyo 110-0016 (JP)
(72) Inventor: WADA, Kiyoshi, Tokyo 110-0016 (JP); FUJIWARA, Nobukazu, Tokyo 110-0016 (JP); URUSHIBARA, Osamu, Tokyo 110-0016 (JP)
(74) Representative: TBK
(86) International application number: PCT/JP2016/081640
(87) International publication number: WO 2017/073581

(56) References cited:
- EP-A2- 1 065 149
- DE-A1-102010 061 556
- DE-C1- 10 145 729
- FR-A1- 2 572 676
- JP-A- H10 113 940
- JP-A- S61 108 519
- JP-A- 2002 103 377
- JP-A- 2003 025 379
- US-B1- 6 328 920
- US-B1- 6 328 920

## Description

### [Technical Field]

The present invention relates to a container including a housing space that can hold contents and a method for producing the container.

### [Background Art]

Various containers for holding contents have been known. The container described in JP 2015-30478 A as an example is produced by injection molding of a polypropylene resin. The container has a base plate whose surface is formed with a gate mark.

EP 1 065 149 A2 discloses a moulded closure for a container which has a seal moulded through the wall of a screw threaded cap. The seal material may extend over the outer surface of the cap to enhance grippability thereof. A moulding method includes backing-off an inner mould part to define a seal cavity, after the cap has been moulded.

### [Summary of the Invention]

### [Technical Problem]

Since the container has the gate mark exposed at the surface of the base plate, when the container is conveyed together with another object, for example, the gate mark may be in contact with the object and damage the other object.

An object of the present invention is to provide a container having a gate mark that is unlikely to contact another object and a method for producing the container.

### [Solution to Problem]

To achieve the aforementioned object, a container according to claim 1 is provided. Advantageous developments are subject-matter of the dependent claims. A container according to the present invention includes a housing space, a first layer, a second layer and a gate mark. The housing space can hold contents. The first layer forms the housing space. The second layer includes an adhered surface that is adhered externally to the first layer, and a non-adhered surface that is not adhered to the first layer. The gate mark is formed on at least one of the inner surface of the first layer and the non-adhered surface.

### [Brief description of the Drawings]

Fig. 1 is a perspective view of a container according to an embodiment.
Fig. 2 is a cross-sectional view taken along the D2-D2 line of Fig. 1.
Fig. 3 is a cross-sectional view showing a first process for producing a lid of the container of Fig. 1.
Fig. 4 is a cross-sectional view showing a second process for producing the lid of the container of Fig. 1.
Fig. 5 is a cross-sectional view showing a state where a second layer has been formed in Fig. 4.
Fig. 6 is a cross-sectional view showing the cavity of Fig. 5 being removed.
Fig. 7 is a cross-sectional view showing the nozzle of the injection molding machine of Fig. 6 being removed.
Fig. 8 is a cross-sectional view of the lid of a container according to another embodiment.

### [Description of Embodiments]

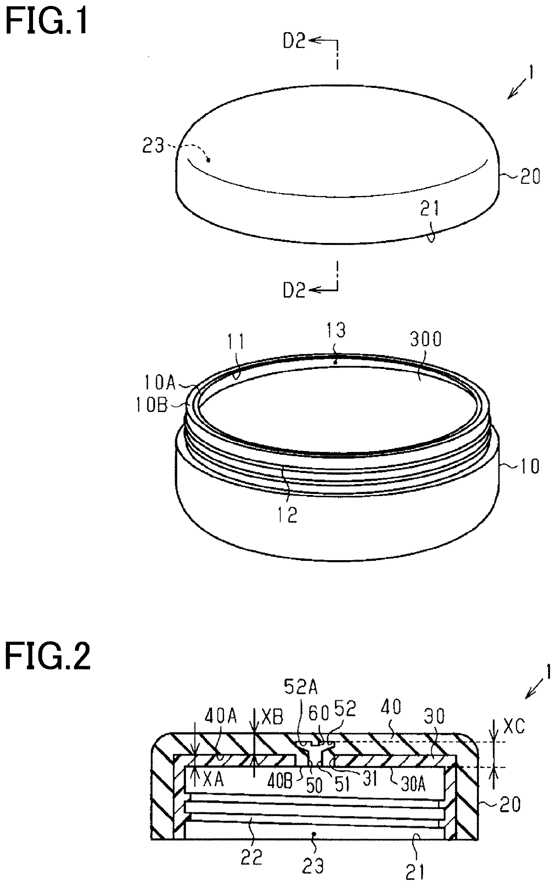

As shown in Fig. 1, a container 1 includes a container body 10 that supports contents 300 and a lid 20 that is attached to the container body 10. An example of the contents 300 may be hair wax.

The container body 10 includes a circular opening 11 facing the lid 20. Along the circumferential direction of the opening 11, a male thread 12 is formed. The container body 10 includes a first layer 10A that forms a housing space 13 for holding the contents 300, and a second layer 10B that is stacked on the outer circumferential area of the first layer 10A. The first and second layers 10A and 10B are formed by injection molding.

The first layer 10A can be made of any material. A preferred example of the material for forming the first layer 10A is a synthetic resin. According to an example, the material for forming the first layer 10A is a polypropylene. The material for forming the first layer 10A preferably has a melting point higher than that of the second layer 10B.

The second layer 10B can be made of any material. A preferred example of the material for forming the second layer 10B is a synthetic rubber. According to an example, the material for forming the second layer 10B is a butadiene rubber. When the second layer 10B is formed of a synthetic rubber, the container body 10 can have a nonslippery surface which provides the end user with a secure grip on the container body 10.

The lid 20 includes a circular opening 21 facing the container body 10. Along the circumferential direction of the opening 21, a female thread 22 is formed (see Fig. 2). The female thread 22 and the male thread 12 of the container body 10 are engaged with each other to close a housing space 23, which is as an internal space of the lid 20, and the housing space 13 of the container body 10.

As shown in Fig. 2, the lid 20 includes a first layer 30 which forms the housing space 23, a second layer 40 which has a part adhered externally to the first layer 30, a recess 50 which is formed in the second layer 40, and a gate mark 60 which is formed inside the recess 50.

The first layer 30 can be made of any material. A preferred example of the material for forming the first layer 30 is a synthetic resin. According to an example, the material for forming the first layer 30 is a polypropylene. The material for forming the first layer 30 preferably has a melting point higher than that of the second layer 40. The first layer 30 has a first thickness XA which is the thickness dimension of the first layer 30, and which is approximately uniform all over the first layer 30. In plan view of the lid 20, the first layer 30 has a center having an aperture 31 penetrating the first layer 30. The second layer 40 is formed on a part of the aperture 31.

The second layer 40 can be made of any material. A preferred example of the material for forming the second layer 40 is a synthetic rubber. According to an example, the material for forming the second layer 40 is a butadiene rubber. When the second layer 40 is formed of a synthetic rubber, the lid 20 can have a nonslippery surface which provides the end user with a secure grip on the lid 20. The second layer 40 includes an adhered surface 40A that is adhered externally to the first layer 30, and a non-adhered surface 40B which continues from the adhered surface 40A and is not adhered to the first layer 30. The part of the second layer 40 including the adhered surface 40A has a second thickness XB which is approximately uniform all over the second layer 40. The second thickness XB is larger than the first thickness XA.

The recess 50 is a portion where a part of the non-adhered surface 40B in the second layer 40 is recessed outward from the housing space 23. In other words, the recess 50 is a portion where a part of the non-adhered surface 40B is recessed in a direction away from the center of the housing space 23. The recess 50 includes a first part 51 which is open to the housing space 23, and a second part 52 which communicates with the first part 51. The depth of the recess 50, namely, a depth XC which is a distance from the end surface of the first part 51 to the end surface of the second part 52, is larger than the first thickness XA. The recess 50 has an opening area which gradually decreases from the second part 52 toward the first part 51.

The first part 51 is formed at the center of the aperture 31 of the first layer 30. The second part 52 is formed further outward than the first part 51, and is tapered from the housing space 23 toward the outer side to increase the opening area.

The gate mark 60 is a portion formed by injection-molding the second layer 40. The gate mark 60 is formed in a bottom surface 52A of the second part 52 of the recess 50.

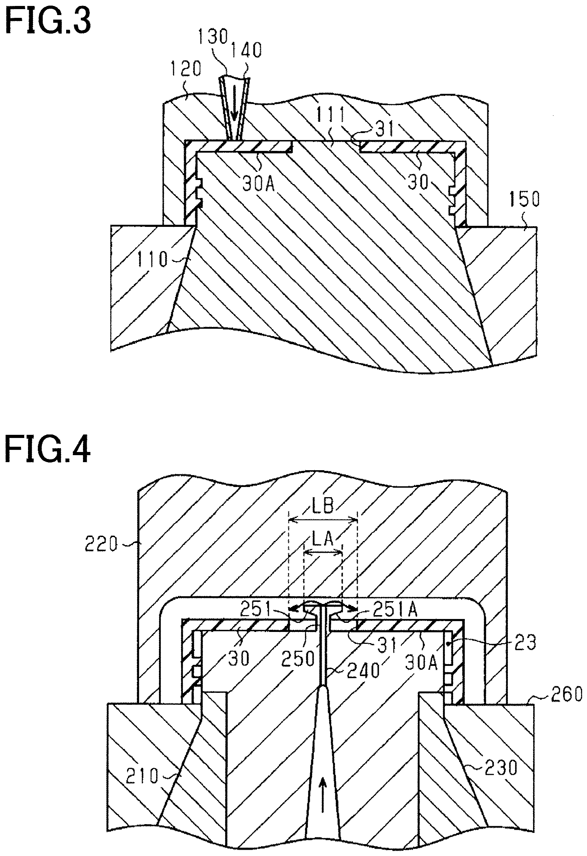

Referring to Figs. 3 to 7, an example of a method for producing the lid 20 is described.

The method for producing the lid 20 includes a first process of injection-molding the first layer 30, and a second process of injection-molding the second layer 40.

As shown in Fig. 3, in the first process, a core 110 and a cavity 120 for injection-molding the first layer 30 are combined. The core 110 and the cavity 120 are supported by a support stand 150.

After the core 110 and the cavity 120 are supported by the support stand 150, a nozzle 140 of an injection molding machine 130 is inserted into the cavity 120. Then, the material for forming the first layer 30 is filled between the core 110 and the cavity 120. The core 110 has a center where a projection 111 is formed toward the cavity 120. Accordingly, when the material for forming the first layer 30 is filled between the core 110 and the cavity 120, the aperture 31 is formed at the center of the first layer 30. When the material for forming the first layer 30 is filled and hardened, the first layer 30 thus formed is removed from the core 110 and the cavity 120. Then, the first layer 30 is conveyed to a support stand 260 where the second process is performed (see Fig. 4).

As shown in Fig. 4, in the second process, a core 210 and a cavity 220 for injection-molding the second layer 40 are combined. The core 210 and the cavity 220 are supported by the support stand 260.

After the core 210 and the cavity 220 are supported by the support stand 260, a nozzle 250 connected to a cylinder 240 of an injection molding machine 230, is inserted from the housing space 23 into the aperture 31 of the first layer 30.

In plan view of the lid 20, the nozzle 250 includes a tip portion 251 which extends in the radial direction of the lid 20. The tip portion 251 has a lower surface 251A which is tapered being widened toward the outer side. Accordingly, the tip portion 251 is narrowed toward the inner side.

A nozzle dimension LA is a dimension of the tip portion 251 of the lid 20 in the radial direction. The nozzle dimension LA is smaller than an aperture dimension LB which is a dimension of the aperture 31 of the first layer 30 in the radial direction of the lid 20. Accordingly, the nozzle 250 does not come in contact with the aperture 31 when inserted into the aperture 31. After the nozzle 250 is inserted into the aperture 31, the material for forming the second layer 40 is filled between the core 210 and the cavity 220.

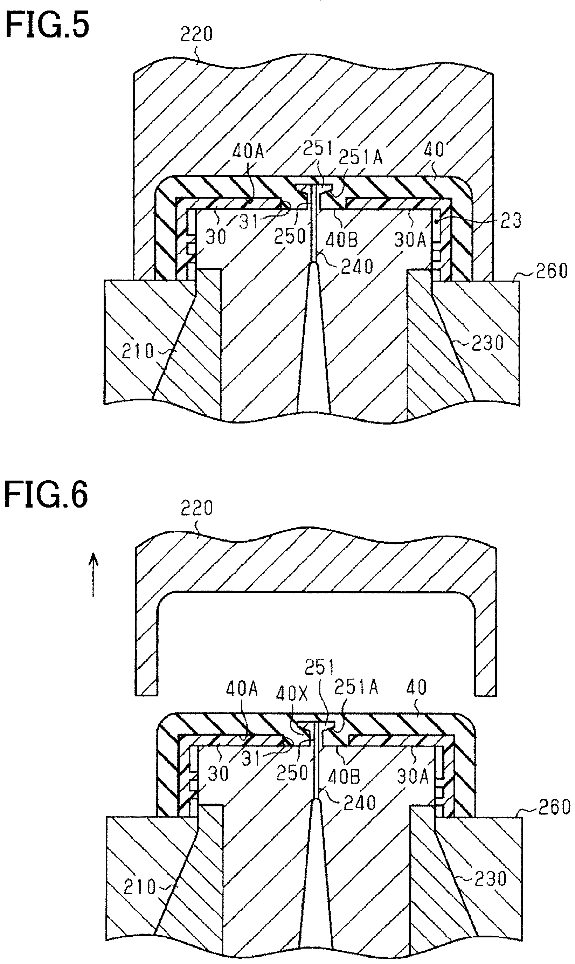

As shown in Fig. 5, the material for forming the second layer 40 is filled between the core 210 and the cavity 220 from the nozzle 250 such that the second layer 40 is formed on the outside of the first layer 30 and on the inside of the aperture 31 of the first layer 30.

As shown in Fig. 6, after filling of the material for forming the second layer 40, the cavity 220 is detached and pulled up. When the cavity is detached and pulled up, if a part of the second layer 40 has been hardened in a state of being bonded to the cavity 220, the second layer 40 and the first layer 30 adhered to the second layer 40 may move together with the cavity 220.

When the second layer 40 moves together with the cavity 220 in a state of being bonded to the cavity 220, the upward movement of a contact portion 40X of the second layer 40 is restricted by the lower surface 251A of the tip portion 251 because the contact portion 40X is in contact with the lower surface 251A of the tip portion 251. The restriction of the upward movement of the second layer 40 allows the cavity 220 to be appropriately separated from the second and first layers 40 and 30.

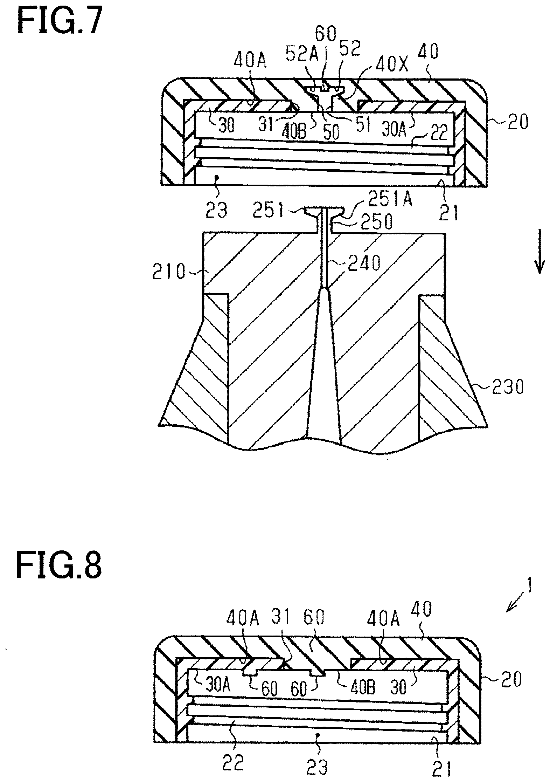

As shown in Fig. 7, after the cavity 220 is detached, the core 210 and the nozzle 250 of the injection molding machine 230 are detached from the second layer 40. The nozzle 250 has the tip portion 251 whose lower surface 251A is tapered toward the outer side so as to enhance the smoothness of the downward movement of the nozzle 250. This enhancement allows the nozzle 250 to be appropriately detached from the second layer 40. The aforementioned method for producing the lid 20, including the first process and the second process, can also be applied to the method for producing the container body 10.

Referring to Figs. 1 and 2, advantageous effects of the container 1 will be described. After the container 1 has been produced, the container 1 is conveyed in a state of being packed in a box together with other containers as an example of other objects. Not being externally exposed at the container 1, the gate mark 60 of the container 1 is unlikely to be in contact with other containers when conveyed. Accordingly, other containers are unlikely to be damaged by the container 1.

The container 1 further provides the following advantages.
(1) Since the gate mark 60 is not exposed outside the container 1, the gate mark 60 is unlikely to be visually recognized by the end user. This enhances the designability of the container 1.
(2) In the container 1, the entire gate mark 60 is entirely inside the recess 50. Therefore, the gate mark 60 is unlikely to be in contact with the contents 300 held in the housing space 23 when compared with a part of the gate mark 60 being protruded from the recess 50. Therefore, the contents 300 are less likely to be damaged.
(3) The container 1 has the depth XC larger than the first thickness XA. Accordingly, the gate mark 60 is located more further from the housing space 23 when compared to the cases where the depth XC is smaller than the first thickness XA2, and where the depth XC is equal to the first thickness XA. With this structure, the gate mark 60 is less likely to be in contact with the contents 300 and accordingly the contents 300 are less likely to be damaged.
(4) The opening area of the recess 50 gradually decreases from the second part 52 toward the first part 51 which means that the gate mark 60 formed on the second part 52 is unlikely to be visually recognized. This enhances the designability of the container 1.

As shown in Fig. 8, according to a container 1 of a modification, a gate mark 60 is formed on an inner surface 30A of a first layer 30. According to the container 1 of this modification, the gate mark 60 is formed on a non-adhered surface 40B of a second layer 40. Namely, a recess 50 is not formed in the container 1 of this modification. In the container 1 of this modification, for example at the first process, from a housing space 23, the material for forming the first layer 30 is filled to injection-mold the first layer 30. In the second process, from the housing space 23, the material for forming the second layer 40 is filled via an aperture 31 so as to injection-mold the second layer 40.

According to a container 1 of a modification, a recess 50 is filled with a synthetic resin or the like.

According to a container 1 of a modification, a non-adhered surface 40B of a second layer 40 is protruded further toward a housing space 23 side than to an inner surface 30A side of a first layer 30. Alternatively, the non-adhered surface 40B of the second layer 40 is located further outward than the inner surface 30A of the first layer 30.

According to a container 1 of a modification, the dimension of at least one of a first thickness XA of a lid 20 and a second thickness XB varies depending on the location on the lid 20.

A container 1 of a modification holds contents 300 other than hair wax. Examples of the contents 300 other than hair wax include lip balm and cosmetics.

## Claims

1. A container (1) comprising:
a housing space (23) that can hold contents;
a first layer (30) forming the housing space (23);
a second layer (40) including an adhered surface (40A) that is adhered externally to the first layer (30), and a non-adhered surface (40B) that is not adhered to the first layer (30); and
a gate mark (60) formed on at least one of an inner surface of the first layer (30) and the non-adhered surface (40B);
**characterized in that**
at least one of the inner surface of the first layer (30) and the non-adhered surface (40B) includes a recess (50) which is recessed outward from the housing space (23); and
the entire gate mark (60) is entirely inside the recess (50).

2. The container (1) according to claim 1, wherein:
the recess (50) is formed in the non-adhered surface (40B); and
the recess (50) has a depth (XC) larger than a thickness (XA) of the first layer (30).

3. The container (1) according to claim 1 or 2, wherein:
the recess (50) includes a first part (51) which is open to the housing space (23), and a second part (52) which communicates with the first part (51) and is formed further outward than the first part (51);
the gate mark (60) is formed in the second part (52); and
the recess (50) has an opening area gradually decreasing from the second part (52) toward the first part (51).

4. The container (1) according to any one of claims 1 to 3, wherein the container (1) further comprises contents held in the housing space (23).

5. A method for producing a container (1), the container (1) comprising:
a housing space (23) that can hold contents;
a first layer (30) forming the housing space (23);
a second layer (40) including an adhered surface (40A) that is adhered externally to the first layer (30), and a non-adhered surface (40B) which continues from the adhered surface (40A) and is not adhered to the first layer (30); and
a gate mark (60) formed on at least one of an inner surface of the first layer (30) and the non-adhered surface (40B), the first and the second layers (30, 40) being injection-molded, wherein:
the method comprises:
a first process of injection-molding the first layer (30); and
a second process of injection-molding the second layer (40) from inside the housing space (23) toward the outer side,
wherein
at least one of the inner surface of the first layer (30) and the non-adhered surface (40B) includes a recess (50) which is recessed outward from the housing space (23); and
the entire gate mark (60) is entirely inside the recess (50).

## Patentansprüche

1. Behälter (1), der aufweist:
einen Unterbringungsraum (23), der Inhalte enthalten kann;
eine erste Schicht (30), die den Unterbringungsraum (23) ausbildet;
eine zweite Schicht (40), die eine angehaftete Fläche (40A), die außen an die erste Schicht (30) angehaftet ist, und eine nicht angehaftete Fläche (40B) umfasst, die nicht an die erste Schicht (30) angehaftet ist; und
eine Angussstelle (60), die an mindestens einer von einer Innenfläche der ersten Schicht (30) und der nicht angehafteten Fläche (40B) ausgebildet ist;
**dadurch gekennzeichnet, dass**
die Innenfläche der ersten Schicht (30) und/oder die nicht angehaftete Fläche (40B) eine Vertiefung (50) umfasst/en, die von dem Unterbringungsraum (23) nach außen vertieft ist, und
die gesamte Angussstelle (60) vollständig innerhalb der Vertiefung (50) ist.

2. Behälter (1) gemäß Anspruch 1, wobei:
die Vertiefung (50) in der nicht angehafteten Fläche (40B) ausgebildet ist; und
die Vertiefung (50) eine Tiefe (XC) hat, die größer ist als eine Dicke (XA) der ersten Schicht (30).

3. Behälter (1) gemäß Anspruch 1 oder 2, wobei:
die Vertiefung (50) einen ersten Teil (51), der sich zu dem Unterbringungsraum (23) öffnet, und einen zweiten Teil (52) umfasst, der mit dem ersten Teil (51) in Verbindung ist und weiter auswärts ausgebildet ist als der erste Teil (51);
die Angussstelle (60) in dem zweiten Teil (52) ausgebildet ist; und
die Vertiefung (50) einen Öffnungsbereich hat, der sich von dem zweiten Teil (52) in Richtung des ersten Teils (51) allmählich verringert.

4. Behälter (1) gemäß einem der Ansprüche 1 bis 3, wobei der Behälter (1) ferner Inhalte aufweist, die in dem Unterbringungsraum (23) enthalten sind.

5. Verfahren zum Herstellen eines Behälters (1), wobei der Behälter (1) aufweist:
einen Unterbringungsraum (23), der Inhalte enthalten kann;
eine erste Schicht (30), die den Unterbringungsraum (23) ausbildet;
eine zweite Schicht (40), die eine angehaftete Fläche (40A), die außen an die erste Schicht (30) angehaftet ist, und eine nicht angehaftete Fläche (40B) umfasst, die sich von der angehafteten Fläche (40A) fortsetzt und nicht an die erste Schicht (30) angehaftet ist; und
eine Angussstelle (60), die an mindestens einer von einer Innenfläche der ersten Schicht (30) und der nicht angehafteten Fläche (40B) ausgebildet ist, wobei die erste und die zweite Schicht (30, 40) spritzgegossen sind, wobei:
das Verfahren aufweist:
einen ersten Vorgang zum Spritzgießen der ersten Schicht (30); und
einen zweiten Vorgang zum Spritzgießen der zweiten Schicht (40) von innerhalb des Unterbringungsraums (23) in Richtung der Außenseite,
wobei
die Innenfläche der ersten Schicht (30) und/oder die nicht angehaftete Fläche (40B) eine Vertiefung (50) umfasst/en, die von dem Unterbringungsraum (23) nach außen vertieft ist, und
die gesamte Angussstelle (60) vollständig innerhalb der Vertiefung (50) ist.

## Revendications

1. Récipient (1) comprenant :
un espace de logement (23) qui peut contenir un contenu ;
une première couche (30) formant l'espace de logement (23) ;
une seconde couche (40) comprenant une surface collée (40A) qui est collée extérieurement sur la première couche (30), et une surface non collée (40B) qui n'est pas collée sur la première couche (30) ; et
une marque de porte (60) formée sur au moins l'une parmi une surface interne de la première couche (30) et la surface non collée (40B) ;
**caractérisé en ce que** :
au moins l'une parmi la surface interne de la première couche (30) et la surface non collée (40B) comprend un évidement (50) qui est évidé vers l'extérieur à partir de l'espace de logement (23) ; et
toute la marque de porte (60) est complètement à l'intérieur de l'évidement (50).

2. Récipient (1) selon la revendication 1, dans lequel :
l'évidement (50) est formé dans la surface non collée (40B) ; et
l'évidement (50) a une profondeur (XC) supérieure à une épaisseur (XA) de la première couche (30).

3. Récipient (1) selon la revendication 1 ou 2, dans lequel :
l'évidement (50) comprend une première partie (51) qui est ouverte sur l'espace de logement (23), et une seconde partie (52) qui communique avec la première partie (51) et est formée davantage vers l'extérieur que la première partie (51) ;
la marque de porte (60) est formée dans la seconde partie (52) ; et
l'évidement (50) a une zone d'ouverture diminuant progressivement de la seconde partie (52) vers la première partie (51).

4. Récipient (1) selon l'une quelconque des revendications 1 à 3, dans lequel le récipient (1) comprend en outre un contenu maintenu dans l'espace de logement (23).

5. Procédé pour produire un récipient (1), le récipient (1) comprenant :
un espace de logement (23) qui peut contenir un contenu ;
une première couche (30) formant l'espace de logement (23) ;
une seconde couche (40) comprenant une surface collée (40A) qui est collée à l'extérieur de la première couche (30), et une surface non collée (40B) qui continue à partir de la surface collée (40A) et n'est pas collée à la première couche (30) ; et
une marque de porte (60) formée sur au moins l'une parmi une surface interne de la première couche (30) et la surface non collée (40B), la première et la seconde couche (30, 40) étant moulées par injection, dans lequel :
le procédé comprend :
un premier processus pour mouler par injection la première couche (30) ; et
un second processus pour mouler par injection la seconde couche (40) depuis l'intérieur de l'espace de logement (23) vers le côté externe,
dans lequel :
au moins l'une parmi la surface interne de la première couche (30) et la surface non collée (40B) comprend un évidement (50) qui est évidé vers l'extérieur à partir de l'espace de logement (23) ; et
toute la marque de porte (60) est complètement à l'intérieur de l'évidement (50).
